# EUROPEAN PATENT APPLICATION

(11) **EP 2 014 153 A1**
(43) Date of publication of application: **14.01.2009**
(21) Application number: 08159991.2
(22) Date of filing: 09.07.2008
(51) Int. Cl.: A01G 23/04

(54) **Blade for root balling machine with reinforced coupling**

(30) Priority: 13.07.2007 IT PD20070068 U
(71) Applicant: Holmac S.A.S. di Gastaldi Christian E.C., 35127 Padova (IT)
(72) Inventor: Gastaldi, Aristide, 35010, Vigonza, Frazione S. Vito PD (IT)
(74) Representative: Modiano, Micaela Nadia

(57) **Abstract**

A blade (10) for a root balling machine with reinforced coupling with a substantially semicircular shape, which can be associated detachably, at a first end thereof (10a), with an actuation assembly (12) which is suitable for a combined rotary and vibrating motion. The blade (10) being pivotable detachably, at its second end (10b), to a supporting spike (13). The blade (10) also comprising, at the second end (10b), a seat (14) for coupling with a reinforcement member (15) which is substantially shaped like an elongated rib and is fixed to the blade (10) by perimetric welding, the reinforcement member (15) being associable with the supporting spike (13) by way of articulation means (16).

## Description

The present invention relates to a blade for a root balling machine with reinforced coupling.

Root balling machines for transplanting plants with their roots, adapted to obtain a substantially hemispherical clod from the ground, are currently known in the plant nursery field.

These machines are equipped with an arc-like blade, which is substantially semicircular and is articulated at its ends to a frame which is supported by an appropriate provided tractor or the like.

One end of the blade is connected so that it can oscillate to a supporting spike, while the other end is associated with an actuation assembly which is adapted to impart thereto a rotary motion about the articulation axis and a vibrating motion.

In order to obtain the clod, the supporting spike is driven into the ground and then the blade is rotated and, by vibrating, penetrates the ground, cutting the roots and breaking or removing stones or other obstacles to its motion.

The blade is shaped so as to meet two requirements: it is thin and sharp, in order to penetrate the ground easily, and has substantial thicknesses at the ends, in order to withstand the stresses to which it is subjected to obtain the clod.

The means for articulating the blade to the spike currently generally comprise a ring which is formed by the end of such blade and can be coupled to a pivot provided on the spike.

Optionally, reinforcement discs are applied at the ring and are welded to the blade perimetrically.

Another solution for engaging the blade to the spike has a pivot in which the base is welded perimetrically to the blade and can be coupled to a corresponding hole provided in the spike.

The blades thus conceived have, especially in onerous working conditions, a short life.

The vibrations to which they are subjected in fact generate alternating tensions which, in the regions for the articulation of the blades to the frame, tend to generate and increase rupture cracks until the blade fails.

Reinforcement of the blade with superimposed discs welded perimetrically is scarcely useful, since the perimetric welding of superimposed elements has a natural fragility to these stresses and already incorporates the triggering of the crack.

The aim of the present invention is to provide a blade for a root balling machine which has a coupling to the supporting spike that is more resistant to stresses than currently known solutions.

Within this aim, an object of the invention is to provide a blade for a root balling machine which is structurally simple and easy to use and can be manufactured with low costs.

This aim and these and other objects, which will become better apparent hereinafter, are achieved by a blade for a root balling machine with reinforced coupling with a substantially semicircular shape, which can be associated detachably, at a first end thereof, with an actuation assembly which is suitable for a combined rotary and vibrating motion, said blade being pivotable detachably, at its second end, to a supporting spike, characterized in that it comprises, at said second end, a seat for coupling with a reinforcement member which is substantially shaped like an elongated rib and is fixed to said blade by perimetric welding, said member being associable with said spike by way of articulation means.

Further characteristics and advantages of the invention will become better apparent from the following detailed description of a preferred but not exclusive embodiment of the blade for root balling machine according to the invention, illustrated by way of non-limiting example in the accompanying drawings, wherein:

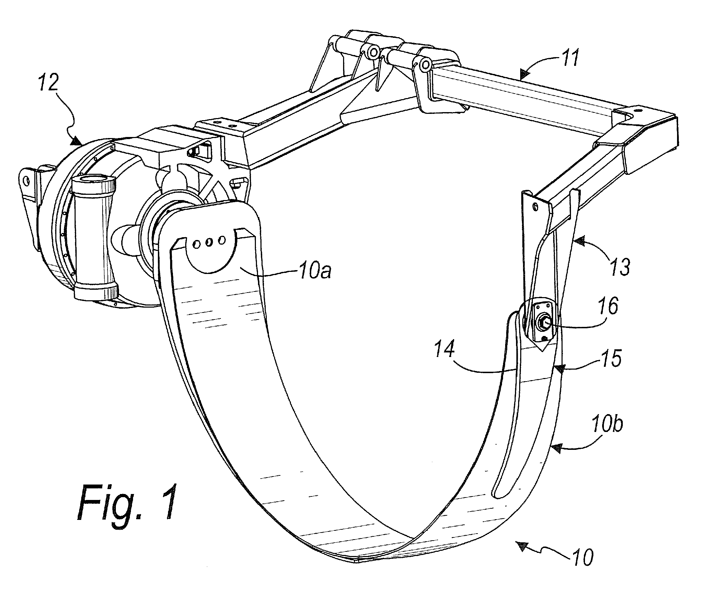

Figure 1 is a perspective view of a root balling machine blade according to the invention;

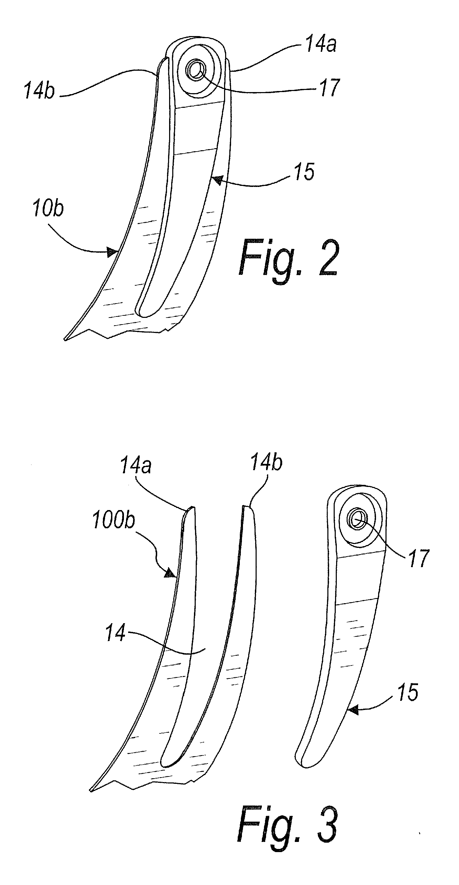

Figure 2 is an enlarged-scale perspective view of a root balling machine blade according to the invention;
Figure 3 is an enlarged-scale exploded perspective view of a detail of a root balling machine blade according to the invention;

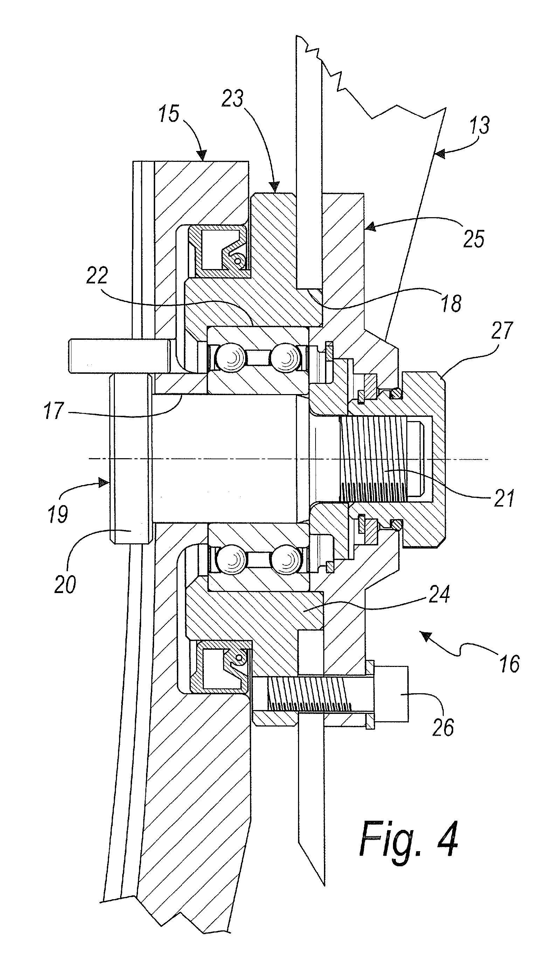

Figure 4 is an enlarged-scale sectional detail view of a blade for a root balling machine according to the invention.

It is noted that anything found to be already known during the patenting process is understood not to be claimed and to be the subject of a disclaimer.

With reference to the cited figures, the reference numeral 10 generally designates a blade for a root balling machine according to the invention, which is substantially semicircular and is supported by a frame 11.

Such blade is associated detachably, at a first end 10a, with an actuation assembly 12, which is suitable for a combined rotary and vibrating motion.

At a second end 10b, the blade 10 can be articulated detachably to a supporting spike 13.

According to the invention, the blade 10 comprises, at the second end 10b, a seat 14 for coupling to a reinforcement member 15.

Preferably, the end 10b comprises two arms 14a and 14b, which define the coupling seat 14, so that such seat is substantially V-shaped.

The reinforcement member 15 is substantially shaped like an elongated rib, which conveniently follows the curvature of the blade 10, and can also be associated with the supporting spike 13 by way of articulation means 16.

Preferably, the articulation means 16 comprise two holes: a first hole 17, formed by the reinforcement member 15, and a second hole 18, formed by the supporting spike 13.

A pivot 19 is coupled to the first hole 17 and is advantageously provided, at one end, with an edge 20 for abutment against the perimetric surface of the inlet of the hole 17 and, at the other end, with a threaded tip 21.

Conveniently, the pivot 19 is supported, so that it can rotate about its own axis, by a bearing 22, which is accommodated in the hole of a flanged bush 23 which forms an annular element 24 for coupling to the second hole 18.

The flanged bush 23 is conveniently coupled to a flanged element 25 so as to surround, between their two flanges, the rim of the second hole 18.

Preferably, the flanged element 25 can be fixed to the flanged bush 23 by means of at least one screw 26.

Further, the flanged element 25 forms advantageously a seat for accommodating a locking nut 27, which can engage the threaded tip 21 of the pivot 19 in order to lock the articulation.

The reinforcement member 15, once coupled to the seat 14, is fixed to the blade 10 by way of a perimetric weld which is conveniently of the butt type.

In practice it has been found that the invention achieves the intended aim and objects, providing a blade for root balling machine which has a coupling to the supporting spike that is more resistant to stresses than currently known solutions, since the interaction between the blade and the reinforcement member occurs by means of the edges of the seat and of the member, acting by compression. In this manner, the welds perform substantially a fixing role and do not act as structural strength elements, to the full advantage of the life of the blade.

In practice, the materials used, so long as they are compatible with the specific use, as well as the contingent shapes and dimensions, may be any according to requirements and to the state of the art.

The disclosures in Italian Patent Application No. PD2007U000068 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A blade (10) for a root balling machine with reinforced coupling with a substantially semicircular shape, which can be associated detachably, at a first end thereof (10a), with an actuation assembly (12) which is suitable for a combined rotary and vibrating motion, said blade (10) being pivotable detachably, at its second end (10b), to a supporting spike (13), **characterized in that** it comprises, at said second end (10b), a seat (14) for coupling with a reinforcement member (15) which is substantially shaped like an elongated rib and is fixed to said blade (10) by perimetric welding, said reinforcement member (15) being associable with said supporting spike (13) by way of articulation means (16).

2. The blade (10) for root balling machine according to claim 1, **characterized in that** said second end (10b) comprises two arms (14a, 14b) which form said substantially V-shaped seat.

3. The blade (10) for root balling machine according to the preceding claims, **characterized in that** said reinforcement member (15) is engaged within said coupling seat (14), providing a coupling with interference.

4. The blade (10) for root balling machine according to one or more of the preceding claims, **characterized in that** said reinforcement member (15) has a curvature which is homogeneous with respect to the curvature of said blade (10).

5. The blade (10) for root balling machine according to one or more of the preceding claims, **characterized in that** said weld is of the butt type.

6. The blade (10) for root balling machine according to one or more of the preceding claims, **characterized in that** said reinforcement member (15) forms a first hole (17), said supporting spike (13) forming a second hole (18), for coupling to said articulation means (16), which comprise a pivot (19) which is coupled to said first hole (17) and is supported, so that it can rotate about its own axis, by a bearing (22) which is accommodated in a flanged bush (23) which forms an annular element (24) for coupling to said second hole (18), said flanged bush (23) being associable detachably, by way of at least one fixing screw (26), with a flanged element (25), their flanges surrounding the perimetric edge of said second hole (18), said flanged element (25) forming a receptacle for accommodating a locking nut (27) which can be associated with said pivot (19).
